(19) Europäisches Patentamt
European Patent Office
Office européen des brevets

(11) EP 0 545 341 B1

(12) **EUROPEAN PATENT SPECIFICATION**

(45) Date of publication and mention of the grant of the patent:
**17.09.1997 Bulletin 1997/38**

(51) Int Cl.$^{6}$: **H04N 5/44**

(21) Application number: **92120420.2**

(22) Date of filing: **30.11.1992**

# (54) Television receiver

Fernsehempfänger

Récepteur de télévision

(84) Designated Contracting States:
**DE GB**

(30) Priority: **29.11.1991 JP 316755/91**
**31.01.1992 JP 16012/92**

(43) Date of publication of application:
**09.06.1993 Bulletin 1993/23**

(73) Proprietor: **SANYO ELECTRIC CO., LTD.**
**Moriguchi-shi, Osaka (JP)**

(72) Inventors:
- **Ebara, Masami**
  **Shijyonawate-shi, Osaka-fu (JP)**
- **Urakoshi, Akira**
  **Higashiosaka-shi, Osaka-fu (JP)**
- **Hamabata, Takayuki**
  **Ikama-gun, Nara-ken (JP)**

(74) Representative: **Glawe, Delfs, Moll & Partner**
**Patentanwälte**
**Postfach 26 01 62**
**80058 München (DE)**

(56) References cited:
**EP-A- 0 339 675**
**EP-A- 0 479 508**
**GB-A- 2 186 165**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 545 341 B1

## Description

### BACKGROUND OF THE INVENTION

Field of the invention

The present invention generally relates to a television receiver. More specifically, the present invention relates to a television receiver in which a squeeze image having an aspect ratio 16:9 or a standard television image having an aspect ratio 4:3 can be displayed on a screen having an aspect ratio 4:3. Description of the prior art

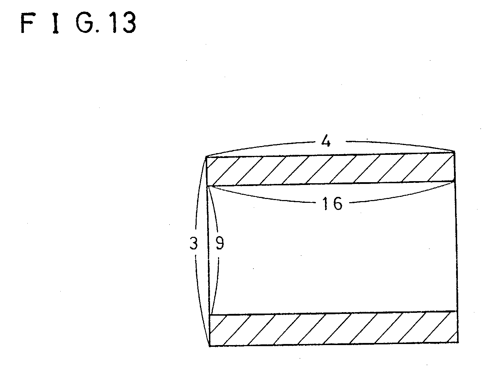

In a television receiver which incorporates a MUSE/NTSC converter, an output of the converter, that is, a squeeze image having an aspect ratio 16:9 is displayed on a screen having an aspect ratio 4:3 in a letter-box form as shown in Figure 13. In such a case, assuming that the number of effective scanning lines of a standard television image of an NTSC system, that is of an aspect ratio 4:3, is 480, the number of scanning lines constituting the squeeze image of an aspect ratio 16:9 becomes 360 (= 480 x 3/4) by a simple calculation. Therefore, vertical resolution of such an squeeze image is drastically deteriorated due to decrease of the number of scanning lines. A television receiver according to the precharacterizing part of claim 1 is disclosed in GB-A-2186165. In this state of the art a cathode ray tube video display device is adapted to display wide aspect ratio signals by reducing the vertical scanning amplitude of the scanning raster. The scan is collapsed in the vertical direction without reducing the number of lines used to display the active picture, leaving unscanned bands at the top and bottom of the display. The device can change between a normal raster scanning mode and such a collapsed wide screen mode automiatically in response to a flag in the received video signal.

### SUMMARY OF THE INVENTION

Therefore, a principal object of the present invention is to provide a television receiver in which no deterioration occurs in the vertical resolution even if a squeeze image having an aspect ratio 16:9 is displayed on a screen having an aspect ratio 4:3.

This object is achieved according to the present invention by a television receiver as defined in claim 1. The dependent claims are related to further advantageous aspects of the present invention.

In a case where the television receiver incorporates a MUSE/NTSC converter, the squeeze image signal having the aspect ratio 4:3 is obtained from the converter.

In a case where of a television receiver of a PAL+ system or a HD-MAC system, an image signal of the image having the second aspect ratio is received by the television receiver, and the image signal having the second aspect ratio is converted into the squeeze image signal having the first aspect ratio in the image conversion means.

In the both cases, the squeeze image having the first aspect ratio is further vertically compressed in a time axis by the image conversion means. The image conversion means includes a field memory, for example, and the squeeze image signal having the first aspect ratio is written in the field memory in response to a write clock and then read-out in response to a read clock that is a predetermined multiplication of the write clock so that the squeeze image having the first aspect ratio is vertically compressed so as to become a squeeze image signal having the second aspect ratio. Preferably, scanning lines are added to the squeeze image signal having the second aspect ratio for blanking portions, and therefore, the squeeze image having the second aspect ratio is displayed on the display screen having the first aspect ratio in a letter-box form, for example.

On the other hand, in the scanning line conversion means, the number of scanning lines of the standard television image having the first aspect ratio is converted into the number of scanning lines of the squeeze image having the second aspect ratio. The scanning line conversion means includes a plurality of line memories, for example, and image signal of respective lines are written in the line memories in response to a write clock and then read-out in response to a read clock that is a predetermined multiplication of the write clock, and the image signal of the respective lines read from the line memories are applied to an interpolation filter by which scanning line interpolation can be performed. If the number of scanning lines of the squeeze image having the second aspect ratio is N, the number of scanning lines of the standard television image, for example, PAL, NTSC or the like is converted into N.

In accordance with the present invention, no deterioration occurs in the vertical resolution even if the squeeze image having the second aspect ratio is to be displayed on the display having the first aspect ratio.

Furthermore, the number of scanning lines of the squeeze image and the number of scanning lines of the standard television image becomes coincident with each other, it is possible to display the squeeze image and the standard television image with utilizing a common vertical deflection system when a CRT is used.

The above described objects and other objects, features, aspects and advantages of the present invention will become more apparent from the following detailed description of the present invention when taken in conjunction with the accompanying drawings.

## BRIEF DESCRIPTION OF THE DRAWINGS

Figure 1 is a block diagram showing a Y component circuit of one embodiment according to the present invention;
Figure 2 is a block diagram showing an R-Y component circuit of the embodiment;
Figure 3 is a block diagram showing a B-Y component circuit of the embodiment;
Figure 4 is an illustrative view showing a state where a squeeze image having an aspect ratio 16:9 is displayed on a display screen having an aspect ratio 4:3 in a letter-box form;
Figure 5 is an illustrative view showing a state where a squeeze image having an aspect ratio 4:3 is displayed as it is on the display screen having an aspect ratio 4:3;
Figure 6 is an illustrative view showing a state where the squeeze image having an aspect ratio 16:9 on the display screen having an aspect ratio 4:3 in a letter-box form;
Figure 7 is a timing chart showing an operation of a first image generating circuit shown in Figure 1;
Figure 8 is a timing chart showing write and read of line memories included in a second image generating circuit shown in Figure 1;
Figure 9 is a timing chart showing an operation of an interpolation filter included in the second image generating circuit;
Figure 10 is a further timing chart showing an operation of the interpolation filter included in the second image generating circuit;
Figure 11 is a block diagram showing scanning line interpolation circuit according to an embodiment of the present invention;
Figure 12 is an illustrative view showing a scanning line interpolation in a scanning line interpolation filter for still image and a scanning line interpolation filter for moving picture; and
Figure 13 is an illustrative view showing a state where an image having an aspect ratio 16:9 is displayed on the display screen having an aspect ratio 4:3 in a letter-box form.

## DETAILED DESCRIPTION OF THE PREFERRED EMBODIMENTS

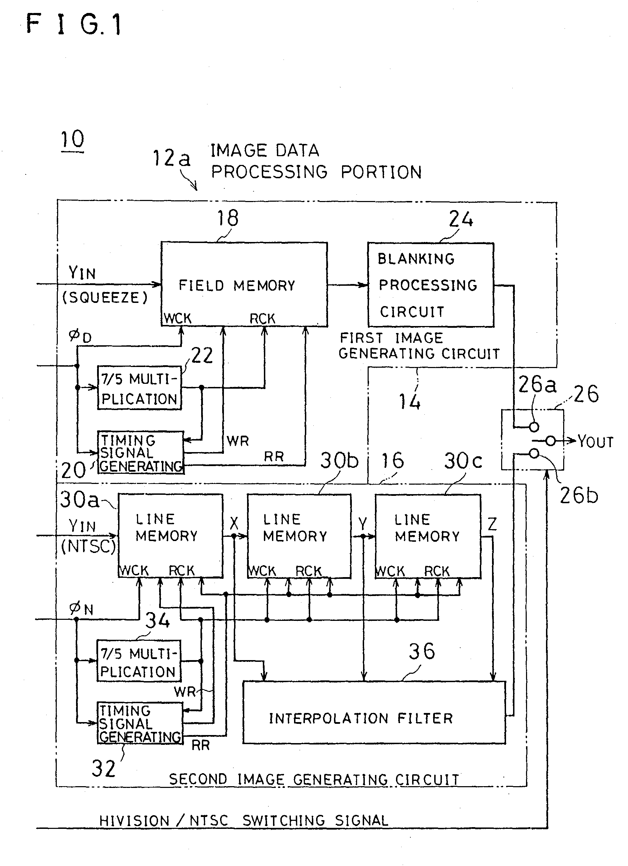

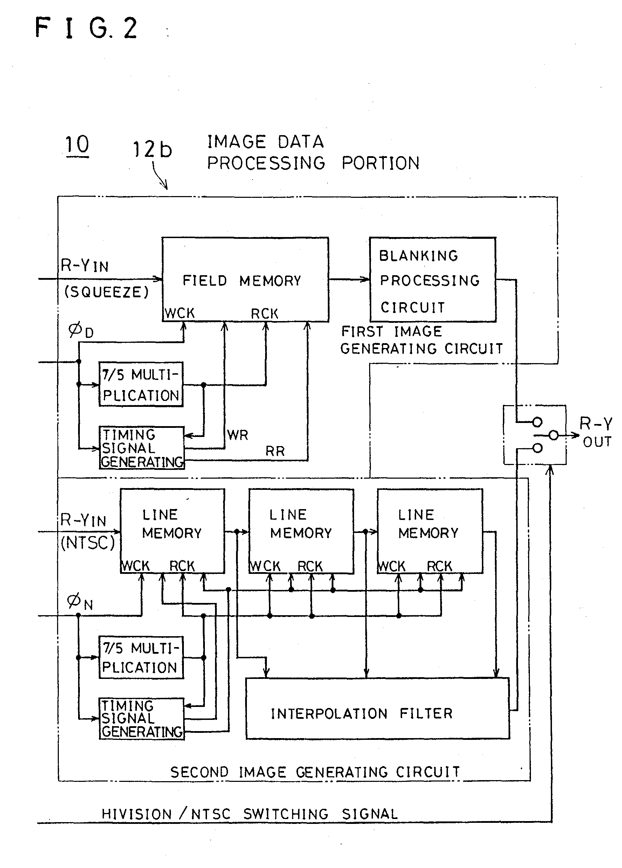

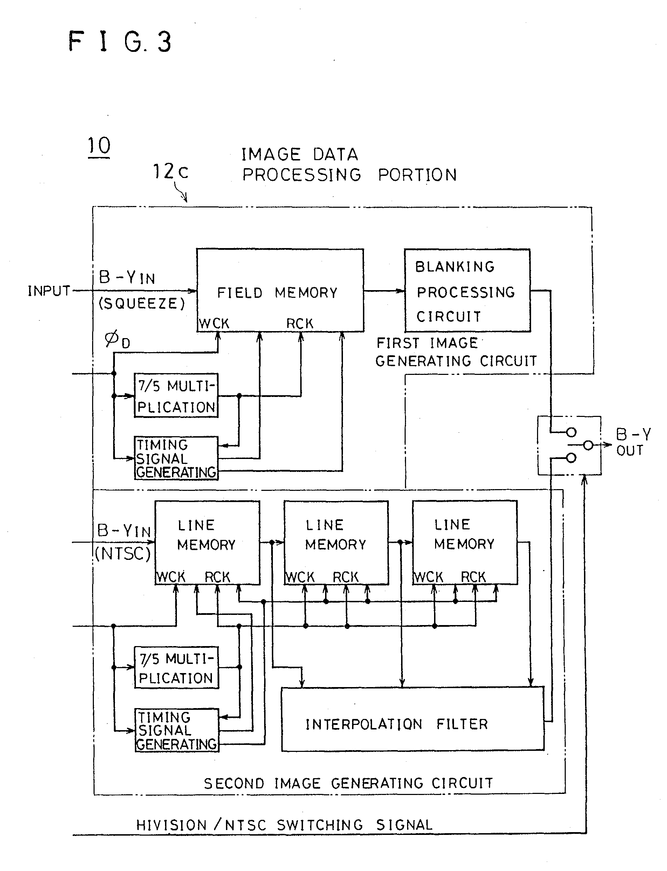

With referring to Figure 1 to Figure 3, a television receiver 10 according to this embodiment shown includes image data processing portions 12a, 12b and 12c which respectively perform the processing of a Y component, an R-Y component and a B-Y component all included in the input image data. Since the image data processing portions 12a, 12b and 12c are similar to each other in structure and operation thereof while the data components to be processed are different from each other, in the following, only the image data processing portion 12a will be described in detail, and descriptions of the image data processing portions 12b and 12c will be omitted.

The image data processing portion 12a shown in Figure 1 includes a first image data generating circuit 14 which generates image data of a squeeze image having an aspect ratio 16:9 on the basis of squeeze image data applied by a MUSE/NTSC converter (not shown), and a second image data generating circuit 16 which generates image data of an NTSC television image having an aspect ratio 4:3 through a scanning line conversion on the basis of the number of scanning lines of the image data generated by the first image data generating circuit 14.

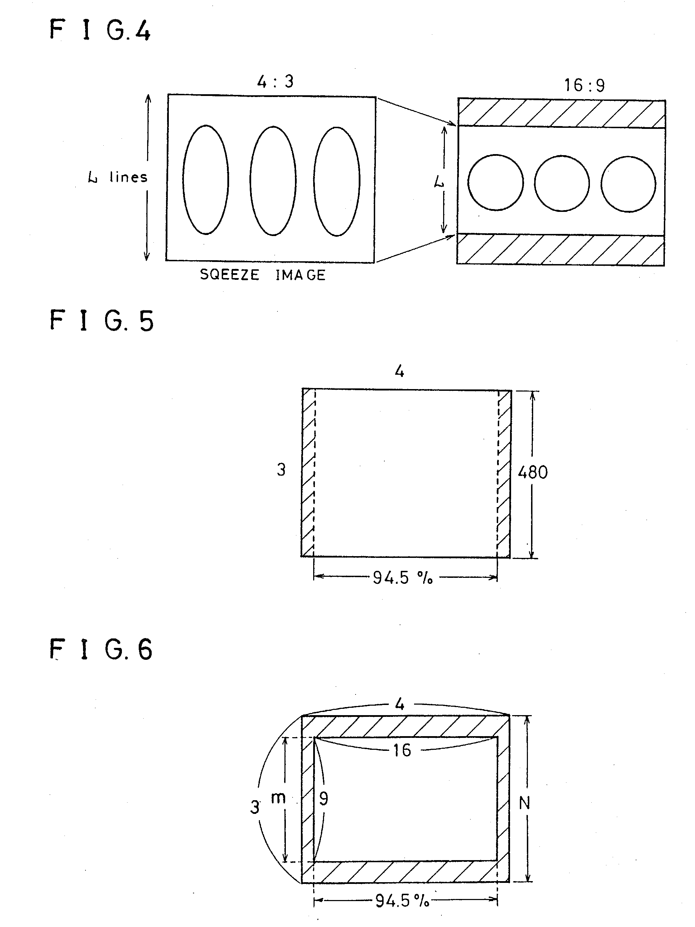

In the first image data generating circuit 14, the squeeze image having an aspect ratio 4:3 that is outputted from the MUSE/NTSC converter is compressed in a vertical direction so that a squeeze image having an aspect ratio 16:9 and the number of scanning lines as the same as the squeeze image having an aspect ratio 4:3 can be generated. According to such a time axis compression, as shown in Figure 4, circles which become longitudinal circles in the squeeze image having an aspect ratio 4:3 becomes complete rounds that are the same as that of an original image.

In addition, if the squeeze image having an aspect ratio 4:3 is displayed as it is on the display screen having an aspect ratio 4:3, the squeeze image is displayed as shown in Figure 5. More specifically, in a vertical direction, by thinning the scanning lines of 960 out of the effective scanning lines of 1032 of the MUSE signal for every two lines, the scanning lines of 480 are formed. Therefore, in a case of Figure 5, an upper end and lower end of the squeeze image having an aspect ratio 4:3 are respectively broken slightly with respect to the original image. On the other hand, in a horizontal direction, no drop-out occurs in the image because one horizontal period of the MUSE signal becomes one horizontal scanning line of the NTSC television image as it is. However, since a ratio of an effective horizontal scanning period with respect to a horizontal period of the squeeze image having an aspect ratio 4:3 is slightly different from that of the NTSC standard, a display area in the horizontal direction becomes 94.5 % (= effective scanning ratio of the converter/effective scanning ratio of the NTSC ≒ (748/960)/(750/910)) .

Next, the number of effective scanning lines N in a case where the squeeze image having an aspect ratio 16:9 is displayed on the display screen having an aspect ratio 4:3 in a letter-box form as shown in Figure 6 will be described. First, it is assumed that the number of scanning lines of a case where no drop-out occurs in an original image as shown in Figure 6 is m. A relationship between this m lines and the above described 480 lines can be represented by the following equation (1).

$$m \times (960/1032) = 480 \text{ [lines]} \quad (1)$$

Then, a relationship between m and N can be represented by the following equation (2).

$$m = (9/12) \times 0.945 \times N \quad (2)$$

Therefore, by substituting m evaluated by the equation (1) in the equation (2), N becomes a value shown in the following equation (3).

$$N = (1032/960) \times 480 \times (12/9) \times (1/0.945)$$

$$\fallingdotseq 728 \text{ [lines]} \quad (3)$$

Then, by dividing N by an effective vertical scanning ratio of the NTSC (≒ 480/525), the number of scanning lines L of the squeeze image having an aspect ratio 16:9 becomes 796 lines. This indicates that the number of scanning lines of 525 and the number of effective scanning lines of 480 of the NTSC television image may be converted into the number of scanning lines of 796 and the number of effective scanning lines of 728, respectively. However, since the scanning line structure after the scanning line conversion becomes interlace structure and it is preferable that a ratio of the conversion becomes simple integer ratio, in this embodiment shown, 525 scanning lines are converted into 735 scanning lines (735/525 = 7/5) in the second image generating circuit 16.

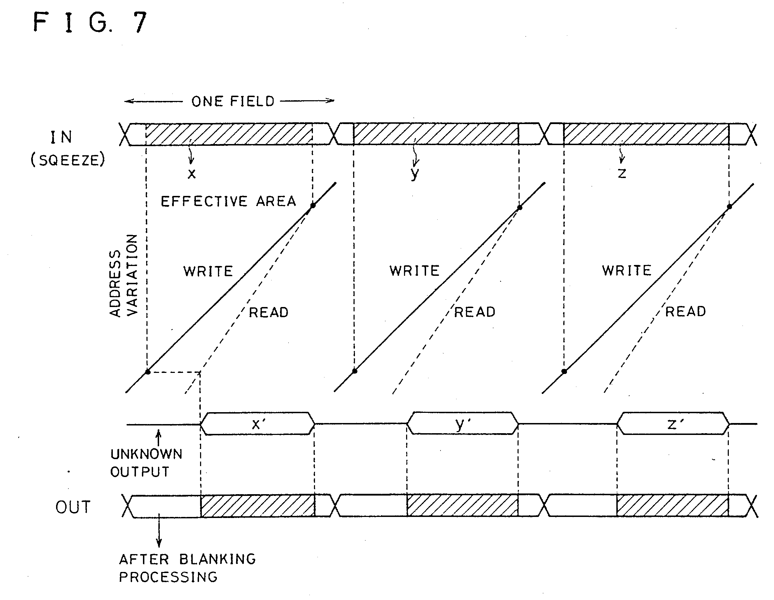

The first image generating circuit 14 further includes a field memory 18 which temporarily stores the Y component data of the squeeze image having an aspect ratio and being outputted from the MUSE/NTSC converter (not shown). A clock signal $\phi_D$ is inputted to the first image generating circuit 14 from a PLL (Phase Locked Loop) for a horizontal clock of the MUSE/NTSC decoder, and the Y component data of the squeeze image having an aspect ratio 4:3 is written in the field memory 18 by utilizing the clock signal $\phi_D$ as a write clock. The clock signal $\phi_D$ is further inputted to a timing signal generating circuit 20. The timing signal generating circuit 20 generates a write reset signal WR on the basis of the clock signal $\phi_D$, and in response to the write reset signal WR, the writing of the field memory 18 is reset. Thus, in the field memory 18, as shown in Figure 7, the Y component data of one field of the squeeze image are written. In addition, in Figure 7, write timings of the squeeze image data is shown by solid lines.

The clock signal $\phi_D$ is further inputted to a 7/5 multiplication circuit 22 to be multiplied by 7/5, and a multiplied clock signal is applied to the field memory 18 as a read clock therefor and inputted to the timing signal generating circuit 20. In response to the read clock applied from the 7/5 multiplication circuit 22 to the field memory 18, the image data stored in the field memory 18 are read-out. Then, the timing signal generating circuit 20 generates a read reset signal RR on the basis of the read clock inputted from the 7/5 multiplication circuit 22 and, in response to the read reset signal RR, the reading of the field memory 18 is reset. In addition, in Figure 7, read timings of the squeeze image data is shown by dotted lines.

The squeeze image data thus written in the field memory 18 and read from the field memory 18 becomes image data of an image (x', y' and z' shown in Figure 7) that is obtained by vertically compressing the original image (x, y and z shown in Figure 7) by 5/7. In a case where such a compressed squeeze image is displayed on the display screen having an aspect ratio 4:3, blanking portions occurs upper or lower portions of the image. Therefore, the image data read from the field memory 18 is applied to a blanking processing circuit 24 in which the predetermined number of scanning lines for blanking portions are added to the upper and lower portions of the image so that no image portion becomes to be included in a blanking period. Therefore, from the blanking processing circuit 24, that is, from the first image generating circuit 14, the squeeze image data is outputted by which an image constituted by an image portion of an aspect ratio 16:9 and blanking portions at the upper and lower portions of the image as shown in Figure 6 is displayed on the display screen having an aspect ratio 4:3. An output of the first image generating circuit 14 is applied to one input 26a of a switch circuit 26.

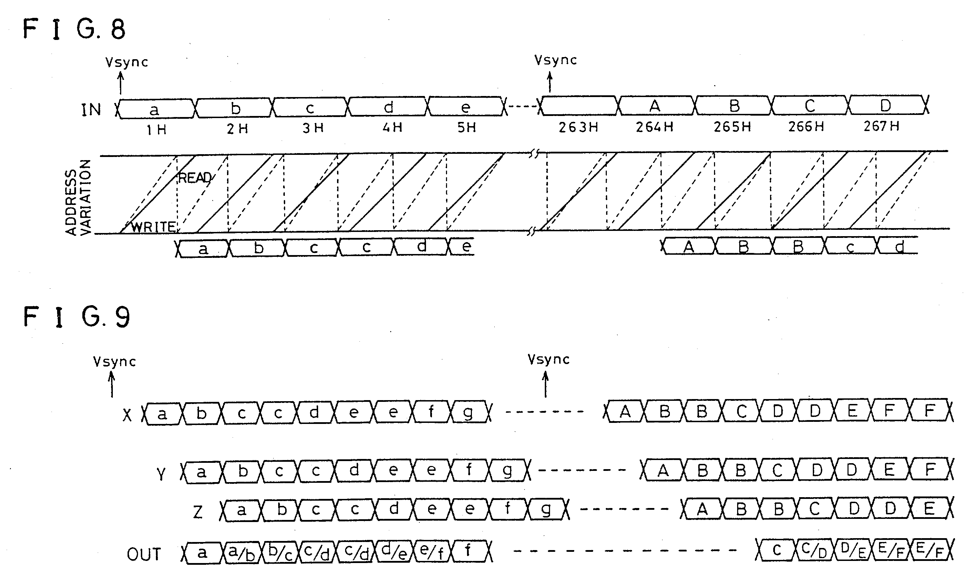

On the other hand, the NTSC image data is inputted to the second image generating circuit 16 and written in a line memory 30a. A clock signal $\phi_N$ is inputted to the second image generating circuit 16 from a PLL for a horizontal clock of the NTSC television signal, and the NTSC image data of one scanning line are written in the line memory 30a by utilizing the clock signal $\phi_N$ as a write clock. The clock signal $\phi_N$ is further inputted to a timing signal generating circuit 32. Then, the timing signal generating circuit 32 generates a write reset signal WR on the basis of the clock signal $\phi_N$ so as to send the same to the line memory 30a. Therefore, as shown by a solid line in Figure 8, the NTSC image data of one scanning line of one vertical period of 15 kHz are written in the line memory 30a.

In order to make the number of scanning lines of the NTSC image data coincident with the number of scanning lines of the output data from the first image generating circuit 14, as mentioned above, the number of scanning lines must be multiplied by 7/5. Therefore, it is necessary to read-out the NTSC image data of 7 scanning lines from the line memory 30a within 5 horizontal periods of the original image data. Therefore, the clock signal $\phi_N$ is applied to 7/5 multiplication circuit 34 to be multiplied by 7/5. Then, an output of the 7/5 multiplication circuit 34 is sent to the line memory 30a as a read clock therefor, and inputted to the timing signal generating circuit 32. The timing signal generating circuit 32 generates a read reset signal RR on the basis of the output of the 7/5 multiplication circuit 34. Therefore, at a timing shown by a dotted line in Figure 8, the NTSC image data for one horizontal period of the original NTSC image data are read from the line memory 30a. That is, the image data for 7 scanning lines having a horizontal frequency of 21 kHz are read-out from the line memory 30a within 5 horizontal periods of the original NTSC image data.

In addition, the output from the 7/5 multiplication circuit 34 is also inputted to line memories 30b and 30c (described later) as write clocks and read clocks, and a signal inputted to the line memory 30a as the read reset signal RR from the timing signal generating circuit 32 is further applied to the line memories 30b and 30c as both write reset signals and read reset signals therefor.

The image data read from the line memory 30a (the image data of X point in Figure 1) includes the image data of 7 scanning lines within 5 horizontal periods of the original NTSC image data, and therefore, as shown in Figure 9, the same image data may be duplicated. It is not preferable that such duplicate data are used as they are as image data for display, and therefore, the image data from the line memory 30a is written in the line memory 30b and read-out by delaying by one horizontal period. The image data (the image data of Y point in Figure 1) read from the line memory 30b is written in the line memory 30c and read-out by delaying by further one horizontal period. Therefore, the image data from the line memory 30c becomes the image data of Z point in Figure 1. In addition, in Figure 9, a/b, b/c, c/d, ... are weighted mean values, respectively.

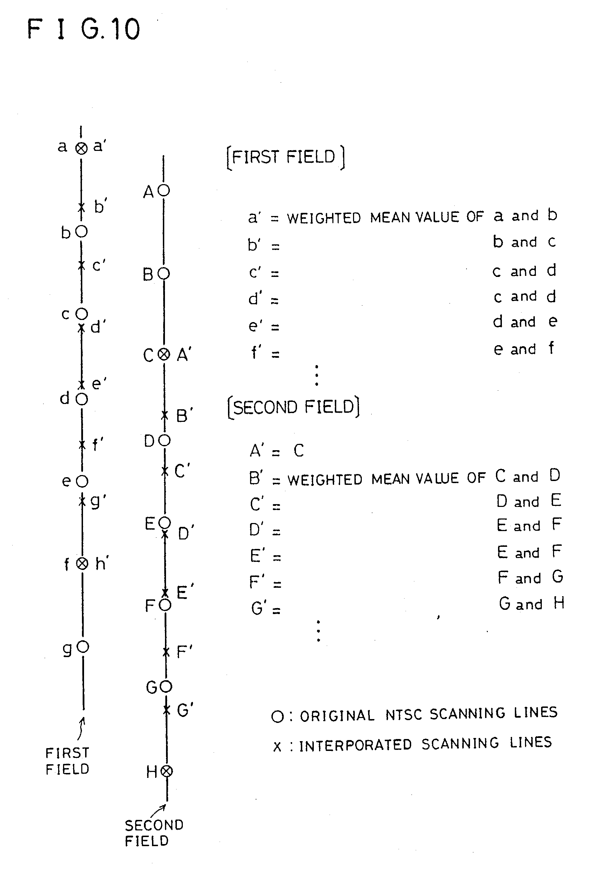

The image data of X point, Y point and Z point shown in Figure 1 are inputted to an interpolation filter 36. In the interpolation filter 36, scanning line interpolation processing as shown in Figure 10 is performed. More specifically, in a first field and a second field succeeding to the first field, in order to generate 7 scanning lines within 5 horizontal periods of the original NTSC image data, by utilizing outputs of the line memories 30a, 30b and 30c, interpolated scanning lines are generated. The image data of the scanning line after conversion that is positioned between the scanning lines of the original NTSC image data when the scanning lines of the original NTSC image data and the scanning lines after conversion are overlapped each other can be evaluated by calculating weighted means values of the image data of the scanning lines of the NTSC image data sandwiching the scanning line after conversion. For example, as shown in Figure 10, the image data b' of the scanning line after conversion in the first field is a weighted mean value of the data a and b of the scanning lines of the original NTSC image. Similarly, in the second field, the scanning line B' is a weighted mean value of the scanning lines C and D.

Thus, the image data shown in Figure 9 are outputted from the interpolation filter 36, and resultingly, 525 scanning lines of the original NTSC image data is converted into 735 scanning lines. An output of the interpolation filter 36, that is, an output of the second image generating circuit 16 is applied to another input 26b of the switch circuit 26.

The switch circuit 26 is switched by a hivision/NTSC changing signal. More specifically, in a first mode for displaying the squeeze image from the MUSE/NTSC converter, the switch circuit 26 selects the first input 26a, that is, the output of the first image generating circuit 14. Therefore, in the first mode, the squeeze image having an aspect ratio 16:9 is displayed on the display screen having an aspect ratio 4:3 in a letter-box form.

In a second mode for displaying the NTSC image, the switch circuit 26 selects the other input 26b, that is, the output of the second image generating circuit 16. Therefore, in the second mode, the NTSC image having an aspect ratio 4:3 is displayed on the display screen having an aspect ratio 4:3.

As described above, the processing similar to that the above described processing are performed for the R-Y component and B-Y component in the image data processing portions 12b and 12c.

Thus, the number of the scanning lines of the NTSC image having an aspect ratio 4:3 is converted into 735 lines that is the number of the scanning lines of the squeeze image having an aspect ratio 16:9, and therefore, it is possible to display the NTSC image as well as the squeeze image by utilizing a signal vertical deflection circuit system of 22 kHz, for example, even if a CRT is used for the display screen having an aspect ratio 4:3.

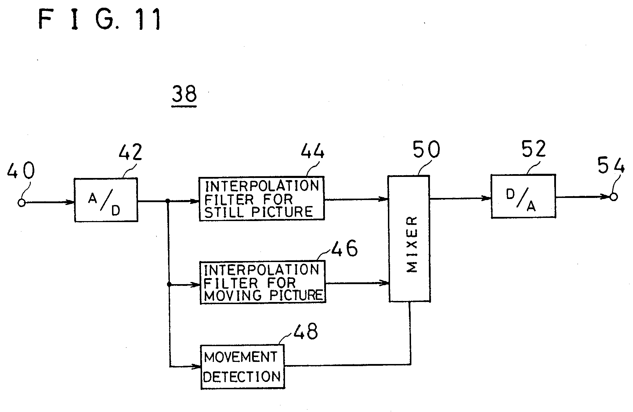

In addition, in the above described embodiment, the scanning line interpolation is performed within the same field; however, in order to interpolate scanning lines in a movement adaptation manner, mean values may be calculated on the basis of data of succeeding fields, as done in Figure 11 embodiment.

In Figure 11, a scanning line interpolation circuit 38 are shown in more detail. With referring to Figure 11, the scanning line interpolation circuit 38 receives an analog television signal having the scanning lines of 525 of the NTSC image from an input terminal 40. The analog television signal is converted into television signal data by an A/D converter 42 so as to be applied to an interpolation filter for still picture 44, interpolation filter for moving picture 46 and a movement detection circuit 48. In the interpolation filter for still picture 44 and the interpolation filter for moving picture 46, in accordance with a method for interpolation of the scanning line (described later), the image data constituted by 525 scanning lines is converted into image data constituted by 735 scanning lines, being applied to a mixer 50.

In addition, if the outputs of the line memories 30a - 30c are utilized in the scanning line interpolation circuit 38 shown in Figure 11, the A/D converter 40 may be omitted.

On the other hand, the movement detection circuit 48 determines whether respective areas of the image is a still picture or a moving picture on the basis of the input image data for each area, and a determination signal is applied to the mixer 50 from the movement detection circuit 48. In the mixer 50, according to the determination signal of the respective areas, the image data formed by 735 scanning lines respectively supplied from the interpolation filter for still picture 44 and the interpolation filter for moving picture 46 are mixed in a predetermined mixing ratio. Then, an output of the mixer 50 is inputted to a D/A converter 52 and outputted from an output terminal 54. However, if Figure 11 circuit is utilized for Figure 1 - Figure 3 embodiment, the D/A converter 52 and the output terminal 54 may be omitted.

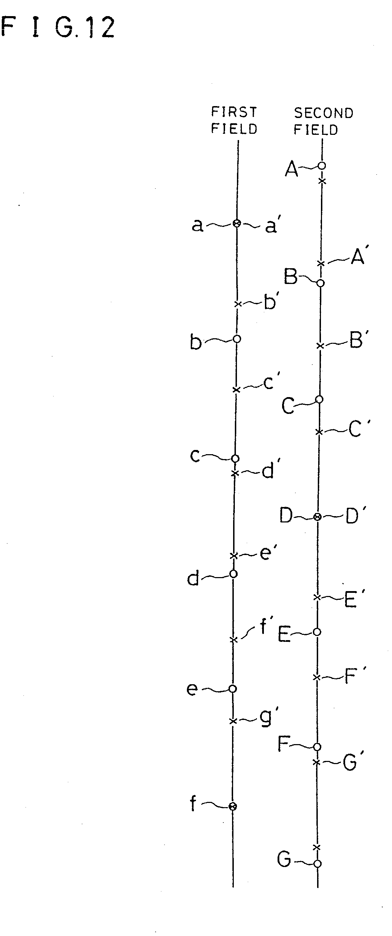

In the interpolation filter for still picture 44 and the interpolation filter for moving picture 46, scanning line interpolation processing as shown in Figure 12, for example, are performed. In Figure 12, a, b, c, d, e and f denote m-th line, (m+1)th line, (m+2)th line, (m+3)th line, (m+4)th line and (m+5)th line of 525 scanning lines in the first field. In addition, A, B, C, D, E, F and G denote M-th line, (M+1)th line, (M+2)th line, (M+3)th line, (M+4)th line, (M+5)th line and (M+6)th line in the 525 scanning lines of the second field.

Then, a', b', c', d', e', f' and g' denote n-th line, (n+1)th line, (n+2)th line, (n+3)th line, (n+4)th line, (n+5)th line and (n+6)th line in the 735 scanning lines of the first filed after scanning line interpolation. In addition, A', B', C', D', E', F' and G' denote N-th line, (N+1)th line, (N+2)th line, (N+3)th line, (N+4)th line, (N+5)th line and (N+6)th line.

In the interpolation filter for still picture 44, the scanning line interpolation is performed so as to satisfy relationships represented by the following equations. In addition, the interpolation operation itself has been well-known, and therefore, a description thereof will be omitted here.

$$a' = a$$

$$b' = 4 \times (B/7) + 3 \times (b/7)$$

$$c' = 1 \times (b/7) + 6 \times (C/7)$$

$$d' = 5 \times (c/7) + 2 \times (D/7)$$

$$e' = 2 \times (D/7) + 5 \times (d/7)$$

$$f' = 6 \times (E/7) + 1 \times (e/7)$$

$$g' = 3 \times (e/7) + 4 \times (F/7)$$

$$A' = 2 \times (a/7) + 5 \times (B/7)$$

$$B' = 6 \times (b/7) + 1 \times (C/7)$$

$$C' = 3 \times (C/7) + 4 \times (c/7)$$

$$D' = D$$

$$E' = 4 \times (d/7) + 3 \times (E/7)$$

$$F' = 1 \times (E/7) + 6 \times (e/7)$$

$$G' = 5 \times (F/7) + 2 \times (f/7)$$

That is, the scanning line interpolation is performed by utilizing the scanning lines of the both of the first field and the second field.

In addition, the interpolation filter for moving picture 46, the scanning line interpolation is performed so as to satisfy the relationships represented by the following equations.

$$a' = a$$

$$b' = 2 \times (a/7) + 5 \times (b/7)$$

$$c' = 4 \times (b/7) + 3 \times (C/7)$$

$$d' = 6 \times (c/7) + 1 \times (D/7)$$

$$e' = 1 \times (c/7) + 6 \times (d/7)$$

$$f' = 3 \times (d/7) + 4 \times (e/7)$$

$$g' = 5 \times (e/7) + 2 \times (f/7)$$

$$A' = 1 \times (A/7) + 6 \times (B/7)$$

$$B' = 3 \times (B/7) + 4 \times (C/7)$$

$$C' = 5 \times (C/7) + 2 \times (D/7)$$

$$D' = D$$

$$E' = 2 \times (D/7) + 5 \times (E/7)$$

$$F' = 4 \times (E/7) + 3 \times (F/7)$$

$$G' = 6 \times (F/7) + 1 \times (G/7)$$

More specifically, in the interpolation filter for moving picture 46, the interpolation operation is performed by utilizing the scanning line lines within the same field.

A generic equation for interpolation which can be led from the above described equations is represented by the following equation (4) on the assumption that the number of the scanning lines after conversion Lout is set within a range from 525 to 1050, that is, $525 < Lout < 1050$.

$$ID_i = idx \times j1/l + (idx+1) \times j2/n \quad (4)$$

$ID_i$: interpolated data of i-th scanning line
idx: (m/n) x i (discarded below the decimal point)
j2: m x i - n x Idx
j1: n - j2
m: the number of the scanning lines of the input image/ G
n: the number of the scanning lines of the output image/ G
G: the greatest common measure of the number of the scanning lines of the input image and the number of the scanning lines of the output image
i: 0 to (n-1)

According to the above described equation (4), it is possible to convert the number of the scanning lines of the standard television image into the number of the scanning lines of the squeeze image having an aspect ratio 16:9. However, a specific method for converting the number of the scanning lines is not limited to the above described method.

Furthermore, in PAL+ system or HD-MAC system, an image signal of an image having an aspect ratio 16:9 is broad-casted. Therefore, in a case-where such PAL+ or HD-MAC television image is to be displayed on the display screen having an aspect ratio 4:3, it is possible to use the present invention. In this case, in the television receiver, a received image having an aspect ratio 16:9 is converted into a squeeze image having an aspect ratio 4:3 that is equivalent to the output of the MUSE/NTSC converter of the in the above described embodiment, and then, the squeeze image having an aspect ratio 4:3 is vertically compressed so that the squeeze image having an aspect ratio 16:9 can be obtained.

Although the present invention has been described and illustrated in detail, it is clearly understood that the same is by way of illustration and example only and is not to be taken by way of limitation, the scope of the present invention being limited only by the terms of the appended claims.

## Claims

**1.** A television receiver which includes a display screen having a first aspect ratio and can display an image signal having a second aspect ratio that is different from the first aspect ratio on the display screen
**characterized** in that the television receiver (10) further comprises

image conversion means (14, 18, 22, 24) for generating a squeeze image signal having the second aspect ratio and a predetermined number of scanning lines by compressing a squeeze image signal having the first aspect ratio in a vertical direction and adding blanking periods to an upper end and a lower end of a compressed squeeze image signal;
scanning line conversion means (16) for converting the number of scanning lines of a standard television image signal having the first aspect ratio into the predetermined number of scanning lines of the squeeze image signal generated by the image conversion means;
and selection means (26) for selecting an output of the image conversion means in a first mode for displaying the squeeze image having the second aspect ratio or an output of the scanning line conversion means in a second mode for displaying the image having the first aspect ratio.

**2.** A television receiver according to claim 1, wherein the image conversion means (14, 18, 22, 24) includes

a memory (18),
write means (20, $\phi_D$) for writing the squeeze image signal having the first aspect ratio in the memory with a write clock,
read means (20, 22) for reading the squeeze image signal from the memory with a read clock that is a predetermined multiplication of the write clock, and
blanking period addition means (24) for adding scanning lines for the blanking periods to the scanning lines of the squeeze image signal read from the memory.

**3.** A television receiver according to any one of claims 1 or 2, wherein the scanning line conversion means (16) convert the number of the scanning lines of the standard television image into the number of the scanning lines of the squeeze image having the second aspect ratio and being outputted from the image compression means.

4. A television receiver according to claim 3, wherein the scanning line conversion means (16) includes interpolation means (30a-30c, 36) for interpolating the number of scanning lines on the basis of data of at least one field.

5. A television receiver according to claim 4, wherein the interpolation means interpolates the scanning lines on the basis of data of a first field and a second field.

6. A television receiver according to claim 5, wherein the interpolation means interpolates scanning lines on the basis of the following equation on the assumption that the number of the scanning lines after conversion Lout is set within a range from 525 to 1050

$$ID_i = idx \times j1/l + (idx+1) \times j2/n$$

$ID_i$: interpolated data of i-th scanning line
idx: (m/n) x i (discarded below the decimal point)
j2: m x i - n x Idx
jl: n - j2
m: the number of the scanning lines of the input image/G
n: the number of the scanning lines of the output image/G
G: the greatest common measure of the number of the scanning lines of the inut image and the number of the scanning lines of the output image
i: 0 to (n-1)

7. A television receiver according to any one of claims 2 to 5, wherein the scanning line conversion means (16) includes a memory (30a), write means (32, $\phi_N$) for writing the standard television image signal having the first aspect in the memory with a write clock, and read means (32, 34) for reading the standard television image signal from the memory with a read clock that is a predetermined multiplication of the write clock.

**Patentansprüche**

1. Fernsehempfänger, der einen Anzeigeschirm mit einem ersten Bildseitenverhältnis enthält und ein Bildsignal mit einem zweiten Bildseitenverhältnis anzeigen kann, das sich von dem ersten Bildseitenverhältnis auf dem Anzeigeschirm unterscheidet,
dadurch **gekennzeichnet**, daß der Fernsehempfänger (10) weiterhin aufweist:

Bildwandlungsmittel (14, 18, 22, 24) zum Erzeugen eines Quetschbildsignals mit dem zweiten Bildseitenverhältnis und einer vorbestimmten Anzahl von Abtastzeilen durch Komprimieren eines Quetschbildsignals mit dem ersten Bildseitenverhältnis in einer vertikalen Richtung und Addieren von Austastperioden zu einem oberen Ende und einem unteren Ende eines komprimierten Quetschbildsignals;

Abtastzeilen-Wandlungsmittel (16) zum Umwandeln der Anzahl von Abtastzeilen eines standardmäßigen Fernsehbildsignals mit dem ersten Bildseitenverhältnis zu der vorbestimmten Anzahl von Abtastzeilen des durch die Bildwandlungsmittel erzeugten Quetschbildsignals; und

Auswahlmittel (26) zum Auswählen einer Ausgabe der Bildwandlungsmittel in einer ersten Betriebsart zum Anzeigen des Quetschbildes mit dem zweiten Bildseitenverhältnis oder einer Ausgabe der Abtastzeilen-Wandlungsmittel in einer zweiten Betriebsart zum Anzeigen des Bildes mit dem ersten Bildseitenverhältnis.

2. Fernsehempfänger nach Anspruch 1, bei dem die Bildwandlungsmittel (14, 18, 22, 24) enthalten:

einen Speicher (18),

Schreibmittel (20, $\phi_D$) zum Schreiben des Quetschbildsignals mit dem ersten Bildseitenverhältnis in den Speicher mit einem Schreibtakt,

Lesemittel (20, 22) zum Lesen des Quetschbildsignals aus dem Speicher mit einem Lesetakt, der eine vorbestimmte Multiplikation des Schreibtaktes ist, und

Austastperioden-Additionsmittel (24) zum Addieren von Abtastzeilen für die Austastperioden zu den Abtastzeilen des aus dem Speicher gelesenen Quetschbildsignals.

3. Fernsehempfänger nach einem der Ansprüche 1 oder 2, bei dem die Abtastzeilen-Wandlungsmittel (16) die Anzahl der Abtastzeilen des standardmäßigen Fernsehbildes zu der Anzahl der Abtastzeilen des Quetschbildes umwandeln, das das zweite Bildseitenverhältnis hat und aus den Bildkompressionsmitteln ausgegeben wird.

4. Fernsehempfänger nach Anspruch 3, bei dem die Abtastzeilen-Wandlungsmittel (16) Interpolationsmittel (30a-30c, 36) enthalten, um die Anzahl der Abtastzeilen auf der Grundlage von Daten mindestens eines Teilbildes zu interpolieren.

5. Fernsehempfänger nach Anspruch 4, bei dem die Interpolationsmittel die Abtastzeilen auf der Grundlage von Daten eines ersten Teilbildes und eines zweiten Teilbildes interpolieren.

6. Fernsehempfänger nach Anspruch 5, bei dem die Interpolationsmittel Abtastzeilen auf der Grundlage der folgenden Gleichung unter der Annahme interpolieren, daß die Anzahl der Abtastzeilen nach der Wandlung Lout innerhalb eines Bereiches von 525 bis 1050 eingestellt ist:

$$ID_i = idx \times j1/l + (idx + 1) \times j2/n$$

$ID_i$: interpolierte Daten der i-ten Abtastzeile
idx: (m/n) x i (unterhalb des Dezimalkommas nicht gewertet)
j2: m x i - n x Idx
j1: n - j2
m: Anzahl der Abtastzeilen des Eingabebildes/G
n: Anzahl der Abtastzeilen des Ausgabebildes/G
G: größter gemeinsamer Teiler aus der Anzahl der Abtastzeilen des Eingabebildes und der Anzahl der Abtastzeilen des Ausgabebildes
i: 0 bis (n - 1).

7. Fernsehempfänger nach einem der Ansprüche 2 bis 5, bei dem die Abtastzeilen-Wandlungsmittel (16) enthalten: einen Speicher (30a), Schreibmittel (32, $\phi_N$) zum Schreiben des standardmäßigen Fernsehbildsignals mit dem ersten Bildseitenverhältnis in den Speicher mit einem Schreibtakt, und Lesemittel (32, 34) zum Lesen des standardmäßigen Fernsehbildsignals aus dem Speicher mit einem Lesetakt, der eine vorbestimmte Multiplikation des Schreibtaktes ist.

## Revendications

1. Récepteur de télévision qui comporte un écran d'affichage ayant un premier format d'image et susceptible d'afficher un signal d'image ayant un second format d'image qui est différent dudit premier format d'image sur ledit écran d'affichage,
**caractérisé** en ce que ledit récepteur de télévison (10) comprend en outre:

des moyens de conversion d'image (14, 18, 22, 24) pour générer un signal d'image de serrage ayant ledit second format d'image et un nombre prédéterminé de lignes de balayage en comprimant un signal d'image de serrage ayant ledit premier format d'image dans un sens vertical et en additionnant des périodes de suppression à une extrémité supérieure et une extrémité inférieure d'un signal d'image de serrage comprimé;

des moyens de conversion de ligne de balayage (16) pour convertir le nombre de lignes de balayage d'un signal d'image de télévision standard ayant ledit premier format d'image en un nombre prédéterminé de lignes de balayage dudit signal d'image de serrage généré par lesdits moyens de conversion d'image; et

des moyens de sélection (26) pour sélectionner une sortie desdits moyens de conversion d'image dans un premier mode pour afficher le signal de serrage ayant ledit second format d'image ou une sortie desdits moyens de conversion de ligne de balayage dans un second mode pour afficher l'image ayant ledit premier format d'image.

**2.** Récepteur de télévision selon la revendication 1, dans lequel lesdits moyens de conversion d'image (14, 18, 22, 24) comportent

une mémoire (18),

un moyen d'écriture (20, $\phi_D$) pour écrire le signal d'image de serrage ayant ledit premier format d'image dans ladite mémoire avec une horloge d'écriture,

un moyen de lecture (20, 22) pour lire le signal d'image de serrage de ladite mémoire avec une horloge de lecture qui est une multiplication prédéterminée de ladite horloge d'écriture, et

un moyen d'addition de période de suppression (24) pour additionner des lignes de balayage pour lesdites périodes de suppression aux lignes de balayage dudit signal d'image de serrage lu à partir de ladite mémoire.

**3.** Récepteur de télévision selon l'une quelconque des revendications 1 ou 2, dans lequel lesdits moyens de conversion de ligne de balayage (16) convertissent le nombre des lignes de balayage de ladite image de télévision standard en un nombre des lignes de balayage dudit signal d'image de serrage ayant ledit second format d'image et étant fourni en sortie à partir desdits moyens de compression d'image.

**4.** Récepteur de télévision selon la revendication 3, dans lequel lesdits moyens de conversion de ligne de balayage (16) comportent des moyens d'interpolation (30a-30c, 36) pour interpoler le nombre de lignes de balayage à partir de données d'au moins une trame.

**5.** Récepteur de télévision selon la revendication 4, dans lequel lesdits moyens d'interpolation interpolent lesdites lignes de balayage à partir de données d'une première trame et d'une seconde trame.

**6.** Récepteur de télévision selon la revendication 5, dans lequel lesdits moyens d'interpolation interpolent des lignes de balayage à partir de l'équation suivante en supposant que le nombre de lignes de balayage après la conversion Lout est réglé dans une plage comprise entre 525 et 1050:

$$ID_i = idx \times j1/l + (idx + 1) \times j2/n$$

$ID_i$: données interpolées de la i$^{ième}$ ligne de balayage
idx: (m/n) x i (supprimé après la virgule décimale)
j2: m x i - n x Idx
j1: n - j2
m: nombre de lignes de balayage de l'image d'entrée / G
n: nombre de lignes de balayage de l'image de sortie / G
G: dénominateur commun le plus grand parmi le nombre de lignes de balayage de l'image d'entrée et le nombre de lignes de balayage de l'image de sortie
i: 0 à (n - 1).

**7.** Récepteur de télévision selon l'une quelconque des revendications 2 à 5, dans lequel lesdits moyens de conversion de ligne de balayage (16) comportent
une mémoire (30a), un moyen d'écriture (32, $\phi_N$) pour écrire ledit signal d'image de télévision standard ayant ledit premier format d'image dans ladite mémoire avec une horloge d'écriture, et un moyen de lecture (32, 34) pour lire ledit signal d'image de télévision standard à partir de ladite mémoire avec une horloge de lecture qui est une multiplication prédéterminée de ladite horloge d'écriture.

F I G. 1

10
12a
IMAGE DATA PROCESSING PORTION
18
24
YIN (SQUEEZE)
FIELD MEMORY
BLANKING PROCESSING CIRCUIT
WCK
RCK
ØD
22
FIRST IMAGE GENERATING CIRCUIT
7/5 MULTI-PLICATION
14
26a
26
TIMING SIGNAL GENERATING
WR
RR
YOUT
20
30b
16
30c
26b
30a
LINE MEMORY
X
LINE MEMORY
Y
LINE MEMORY
Z
YIN (NTSC)
WCK
RCK
ØN
34
36
7/5 MULTI-PLICATION
WR
TIMING SIGNAL GENERATING
INTERPOLATION FILTER
RR
32
SECOND IMAGE GENERATING CIRCUIT
HIVISION / NTSC SWITCHING SIGNAL

F I G. 2

10
12b
IMAGE DATA PROCESSING PORTION
R-YIN
(SQUEEZE)
FIELD MEMORY
WCK
RCK
BLANKING PROCESSING CIRCUIT
FIRST IMAGE GENERATING CIRCUIT
ØD
7/5 MULTI-PLICATION
TIMING SIGNAL GENERATING
WR
RR
R-Y OUT
R-YIN
(NTSC)
LINE MEMORY
LINE MEMORY
LINE MEMORY
WCK
RCK
ØN
7/5 MULTI-PLICATION
TIMING SIGNAL GENERATING
INTERPOLATION FILTER
SECOND IMAGE GENERATING CIRCUIT
HIVISION / NTSC SWITCHING SIGNAL

F I G. 3

10
12c
IMAGE DATA PROCESSING PORTION
INPUT
B-YIN (SQUEEZE)
FIELD MEMORY
WCK
RCK
BLANKING PROCESSING CIRCUIT
ØD
FIRST IMAGE GENERATING CIRCUIT
7/5 MULTI-PLICATION
TIMING SIGNAL GENERATING
B-Y OUT
B-YIN (NTSC)
LINE MEMORY
LINE MEMORY
LINE MEMORY
WCK
RCK
7/5 MULTI-PLICATION
TIMING SIGNAL GENERATING
INTERPOLATION FILTER
SECOND IMAGE GENERATING CIRCUIT
HIVISION / NTSC SWITCHING SIGNAL

F I G. 4

4 : 3
16 : 9
L lines
L
SQEEZE IMAGE

F I G. 5

4
3
480
94.5 %

F I G. 6

4
16
3
m
9
N
94.5 %

F I G. 7
IN
(SQEEZE)
ONE FIELD
x
y
z
EFFECTIVE AREA
WRITE
READ
ADDRESS
VARIATION
x'
y'
z'
UNKNOWN
OUTPUT
OUT
AFTER BLANKING
PROCESSING

Vsync
IN
ADDRESS VARIATION
READ
WRITE
1H
2H
3H
4H
5H
263H
264H
265H
266H
267H
X
Y
Z
OUT

FIG. 8

FIG. 9

FIG.10

a a'
b'
b
c'
c d'
e'
d
f'
e
g'
f h'
g
FIRST FIELD
A
B
C A'
B'
D
C'
E D'
E'
F
F'
G
G'
H
SECOND FIELD
[FIRST FIELD]
a' = WEIGHTED MEAN VALUE OF a and b
b' = b and c
c' = c and d
d' = c and d
e' = d and e
f' = e and f
[SECOND FIELD]
A' = C
B' = WEIGHTED MEAN VALUE OF C and D
C' = D and E
D' = E and F
E' = E and F
F' = F and G
G' = G and H
O : ORIGINAL NTSC SCANNING LINES
X : INTERPORATED SCANNING LINES

FIG. 11

38

40

42

A/D

44

INTERPOLATION FILTER FOR STILL PICTURE

46

INTERPOLATION FILTER FOR MOVING PICTURE

48

MOVEMENT DETECTION

50

MIXER

52

D/A

54

F I G.12

FIRST FIELD
SECOND FIELD
A
a
a'
A'
B
b'
b
B'
c'
C
C'
c
d'
D
D'
e'
d
E'
f'
E
F'
e
g'
F
G'
f
G

F I G. 13

4
16
3
9